# FASCICULE DE BREVET EUROPEEN

(11) **EP 2 116 162 B1**
(45) Date de publication et mention de la délivrance du brevet: **20.06.2012**
(21) Numéro de dépôt: 09356033.2
(22) Date de dépôt: 05.05.2009
(51) Int. Cl.: A47J 43/07

(54) **Appareil électroménager de préparation culinaire prévu pour être tenu à la main muni d'un élement guide cordon**
Haushaltsgerät zur Essenszubereitung, das zum Halten in der Hand konzipiert und mit einem Kabelführungselement ausgestattet ist
Household cooking appliance designed to be held in the hand equipped with cable guide element

(30) Priorité: 07.05.2008 FR 0802542
(43) Date de publication de la demande: 11.11.2009
(73) Titulaire: SEB S.A., 69130 Ecully (FR)
(72) Inventeur: Hamelin, Franck, 50490 Saint Sauveur Lendelin (FR)
(74) Mandataire: Kiehl, Hubert

(56) Documents cités:
- EP-A- 0 283 642
- EP-A- 1 604 598
- EP-A- 1 760 862

## Description

La présente invention concerne le domaine technique général des appareils électroménagers de préparation culinaire tenus à la main, tel qu'un mixeur plongeant, et concerne plus particulièrement un appareil électroménager comportant un boîtier renfermant un moteur électrique alimenté par un cordon pénétrant dans le boîtier au travers d'une ouverture munie d'un élément guide cordon.

Il est connu du document US 2007/0046111 un mixeur plongeant comportant un boîtier renfermant un moteur électrique commandé par un interrupteur et raccordé au réseau d'alimentation électrique par un cordon pénétrant dans le boîtier au travers d'une ouverture munie d'un dispositif guide cordon. Dans ce document, l'interrupteur est actionné par un bouton flexible qui est rapporté dans une ouverture du boîtier.

Ainsi, un tel appareil présente l'inconvénient de posséder un bouton de commande qui nécessite une opération d'assemblage spécifique, ce qui augmente le temps et le coût d'assemblage de l'appareil.

L'invention qui suit vise à pallier ces inconvénients en proposant un appareil électroménager de préparation culinaire dans lequel le montage de l'appareil est simplifié, de sorte que son coût de fabrication est réduit.

Le but de l'invention est atteint par un appareil électroménager de préparation culinaire prévu pour être tenu à la main comprenant un boîtier renfermant un moteur électrique alimenté par des fils électriques issus d'un cordon pénétrant dans le boîtier au travers d'un orifice recevant un élément guide cordon protégeant le cordon à la sortie du boîtier, le boîtier comportant au moins un bouton de commande, caractérisé en ce que le bouton de commande comporte une surface d'actionnement définie par une extension de matière qui forme avec l'élément guide cordon une seule et même pièce monobloc, la pièce monobloc étant surmoulée sur le cordon.

Selon une autre caractéristique de l'invention, la pièce monobloc est réalisée en matériau souple.

Selon une autre caractéristique de l'invention, la pièce est également surmoulée sur un cadre support.

Selon d'autres modes particuliers de réalisation, l'appareil électroménager selon l'invention peut comprendre l'une ou plusieurs des caractéristiques suivantes prises isolément ou selon toutes les combinaisons techniquement possibles :
- le bouton de commande agit sur un interrupteur disposé à l'intérieur du boîtier,
- l'interrupteur est un interrupteur de commande du moteur,
- l'extension de matière forme une membrane souple s'étendant en regard de l'interrupteur,
- l'extension de matière définit plusieurs boutons de commande,
- l'ouverture du boîtier devant laquelle s'étend l'extension est disposée à proximité de l'orifice recevant l'élément guide cordon.

On comprendra mieux les buts, aspects et avantages de la présente invention d'après la description donnée ci-après d'un mode particulier de réalisation de l'invention présenté à titre d'exemple non limitatif, en se référant aux dessins annexés dans lesquels :
- les figures 1A et 1B sont des vues en perspective d'un appareil électroménager selon un mode particulier de réalisation de l'invention ;
- la figure 2 est une vue en perspective d'un dispositif guide cordon associé à un dispositif de commande de l'appareil selon l'invention ;
- les figures 3 à 5 représentent différentes vues en perspective, éclatée ou partiellement éclatée du dispositif guide cordon et du dispositif de commande de la figure 2 ;
- La figure 6 est une autre vue en perspective du dispositif guide cordon de la figure 2.

Seuls les éléments nécessaires à la compréhension de l'invention ont été représentés. Pour faciliter la lecture des dessins, les mêmes éléments portent les mêmes références d'une figure à l'autre.

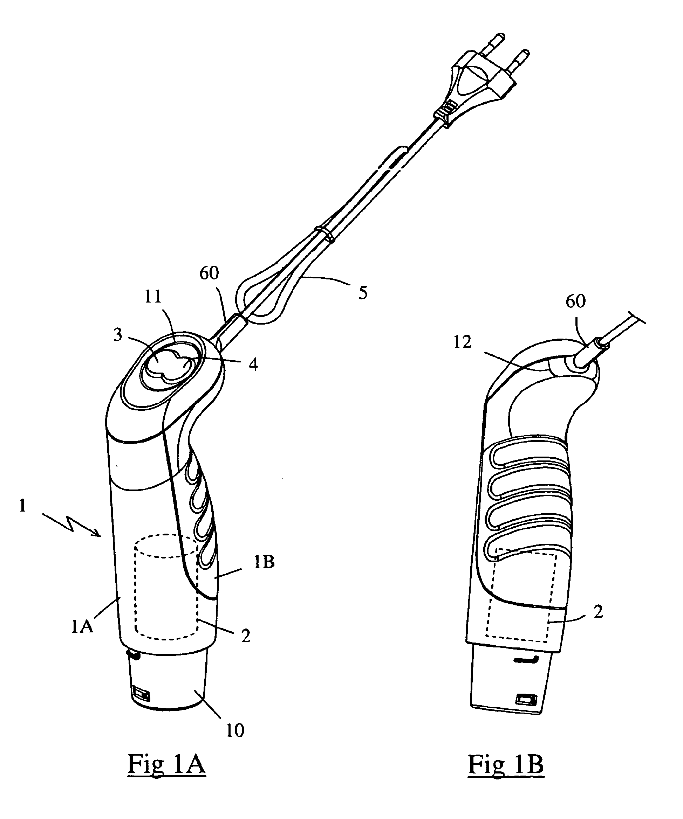

Les figures 1A et 1B représentent des vues en perspective d'un boîtier 1 d'appareil électroménager comportant un corps de forme allongée dont une extrémité longitudinale 10 est destinée à être accouplée à un accessoire, tel un pied de mixage, non représenté sur les figures.

Conformément à ces figures, le boîtier 1 comporte un corps constitué essentiellement par l'assemblage de deux coquilles 1A et 1B l'une sur l'autre. Les deux coquilles 1A,1B renferment, de manière connue en soi, un moteur électrique 2, représenté schématiquement sur les figures 1A et 1B, assurant l'entraînement d'un outil de travail lorsque l'accessoire est accouplé au boîtier.

Le moteur 2 est relié à un circuit d'alimentation comprenant un panneau de commande comportant avantageusement deux boutons 3, 4 permettant de contrôler la mise en marche du moteur 2, ce panneau de commande s'étendant au travers d'une ouverture 11 cylindrique du boîtier.

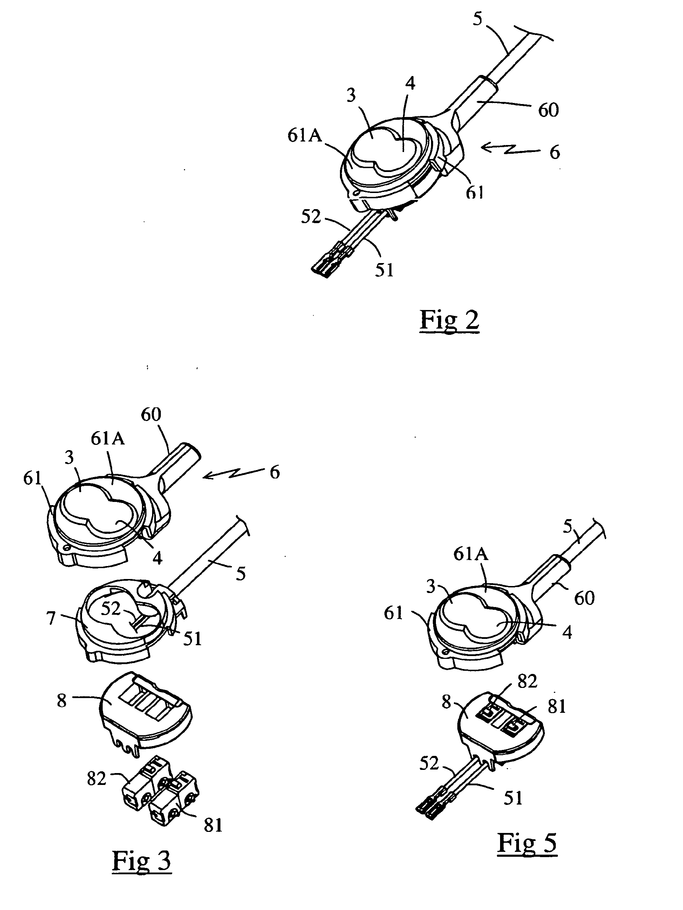

Le circuit d'alimentation du moteur 2 est relié à un réseau électrique au moyen d'un cordon d'alimentation 5 pénétrant dans le boîtier 1 par un orifice 12, le cordon 5 comprenant une gaine de protection renfermant deux fils électriques 51, 52, représentés sur les figures 2 à 6, permettant une alimentation en 220V alternatif. Le cordon 5 reçoit, de manière connue en soi, un élément guide cordon 60 venant envelopper le cordon 5 à la sortie du boîtier 1 pour protéger ce dernier et lui donner une orientation préférentielle.

Plus particulièrement selon l'invention, et conformément aux figures 2 à 6, l'élément guide cordon 60 comporte une extension 61 comprenant une zone de matière 61A, présentant un contour circulaire, venant en regard de l'ouverture 11 du boîtier 1 lorsque l'élément guide cordon 60 est monté dans le boîtier 1, cette zone de matière 61 A comportant avantageusement des renflements définissant les boutons de commande 3, 4 de l'appareil.

L'élément guide cordon 60 et l'extension 61 sont constitués d'une seule et même pièce monobloc 6 qui est surmoulée autour du cordon 5 et d'un cadre support 7. De manière préférentielle, l'élément guide cordon 60 et la zone de matière 61A sont réalisés en chlorure de polyvinyle ou en matériau élastomère, tel que du silicone.

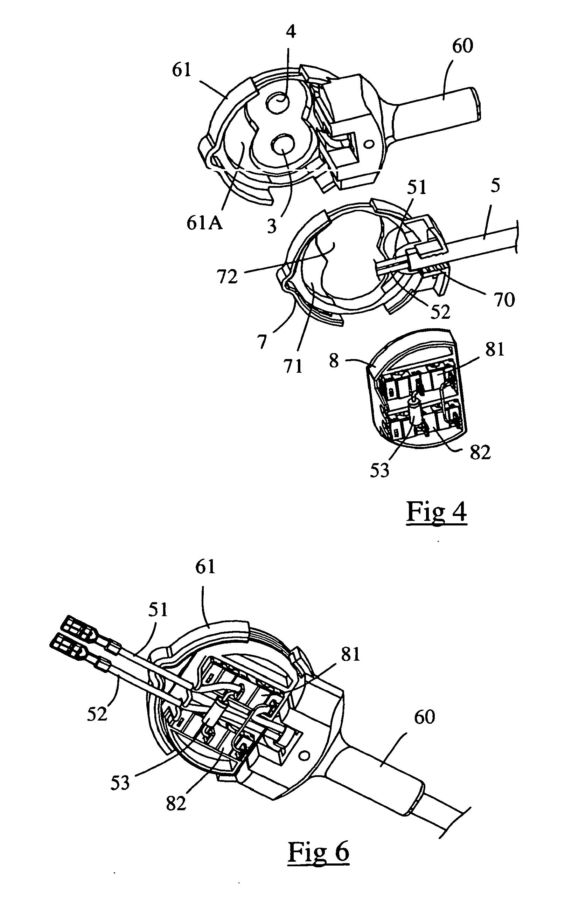

Conformément à la figure 4, le cadre support 7 comporte préférentiellement une griffe 70 venant enserrer la gaine de protection du cordon 5 et comprend une cavité inférieure 71 recevant un bâti 8 supportant un premier 81 et un second 82 interrupteurs, le bâti 8 prenant appui contre les coques 1A, 1B du boîtier et assurant le maintien des deux interrupteurs 81, 82 en regard des deux boutons de commande 3, 4.

Le cadre support 7 comporte une ouverture 72, disposée en regard des boutons de commande 3, 4, qui est recouverte par la zone de matière 61 A, cette dernière présentant la forme d'une membrane souple pouvant être déformée sur quelques millimètres, par la pression d'un doigt, pour actionner les interrupteurs 81, 82.

Conformément à la figure 6, le premier interrupteur 81 est disposé sur l'un des fils électriques 51 issus du cordon 5, ce dernier comportant une cosse de connexion permettant son raccordement à l'une des bornes du moteur 2, l'autre borne du moteur 2 étant reliée directement au deuxième fil électrique 52 issu du cordon 5. Ce premier interrupteur 81 permet la mise en marche du moteur 2 à pleine vitesse, le second interrupteur 82 étant relié parallèlement au premier interrupteur 81 avec l'interposition d'une diode 53 pour permettre le fonctionnement du moteur 2 à vitesse réduite.

L'appareil électroménager ainsi réalisé présente l'avantage d'une plus grande facilité de montage, le dispositif guide cordon et les boutons de commande étant surmoulés sur le cordon puis assemblés avec les interrupteurs du circuit d'alimentation avant d'être montés dans le boîtier.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, la forme de l'extension pourra varier en fonction de la forme du boîtier et du nombre de boutons de commande.

Ainsi, dans une autre variante de réalisation, le dispositif guide cordon et l'extension définissant le ou les boutons de commande pourront être réalisés dans des matières différentes, par exemple au moyen d'un procédé d'injection bi-matière, la pièce restant monobloc.

## Revendications

1. Appareil électroménager de préparation culinaire prévu pour être tenu à la main comprenant un boîtier (1) renfermant un moteur (2) électrique alimenté par des fils électriques (51, 52) issus d'un cordon (5) pénétrant dans ledit boîtier (1) au travers d'un orifice (12) recevant un élément guide cordon (60) protégeant le cordon (5) à la sortie du boîtier (1), ledit boîtier (1) comportant au moins un bouton de commande (3, 4), **caractérisé en ce que** ledit bouton de commande (3, 4) comporte une surface d'actionnement définie par une extension (61) de matière qui forme avec ledit élément guide cordon (60) une seule et même pièce (6) monobloc, ladite pièce (6) monobloc étant surmoulée sur le cordon (5).

2. Appareil électroménager selon la revendication 1, **caractérisé en ce que** ladite pièce monobloc (6) est réalisée en matériau souple.

3. Appareil électroménager selon l'une quelconque des revendications 1 à 2, **caractérisé en ce que** ladite pièce (6) est également surmoulée sur un cadre support (7).

4. Appareil électroménager selon l'une quelconque des revendications 1 à 3, **caractérisé en ce que** ledit bouton de commande (3, 4) agit sur un interrupteur (81, 82) disposé à l'intérieur du boîtier (1).

5. Appareil électroménager selon la revendication 4, **caractérisé en ce que** ledit interrupteur (81, 82) est un interrupteur de commande du moteur (2).

6. Appareil électroménager selon la revendication 4 ou 5, **caractérisé en ce que** ladite extension (61) de matière forme une membrane souple s'étendant en regard de l'interrupteur (81, 82).

7. Appareil électroménager selon l'une quelconque des revendications 1 à 6, **caractérisé en ce que** ladite extension (61) de matière définit plusieurs boutons de commande (3, 4).

8. Appareil électroménager selon l'une quelconque des revendications 1 à 7, **caractérisé en ce que** le boîtier (1) comporte une ouverture (11), devant laquelle s'étend l'extension (61), qui est disposée à proximité de l'orifice (12) recevant l'élément guide cordon (60).

## Claims

1. A handheld electrical household appliance intended for culinary preparation including a casing (1) containing an electric motor (2) powered by electric wires (51, 52) originating from a cord (5) that extends into said casing (1) through an opening (12) which receives a cord guide element (60) protecting the cord (5) at the point at which it exits the casing (1), said casing (1) containing at least one control button (3, 4), **characterised in that** said control button (3, 4) includes an actuation surface defined by an extension (61) of material which forms with said cord guide element (60) a single one-piece part (6), said one-piece part (6) being overmoulded onto the cord (5).

2. A household appliance according to claim 1, **characterised in that** said one-piece part (6) is made of a flexible material.

3. A household appliance according to any one of claims 1 to 2, **characterised in that** said one-piece part (6) is also overmoulded onto a support frame (7).

4. A household appliance according to any one of claims 1 to 3, **characterised in that** said control button (3, 4) acts on a switch (81, 82) provided inside the casing (1).

5. A household appliance according to claim 4, **characterised in that** said switch (81, 82) is a control switch of the motor (2).

6. A household appliance according to claim 4 or 5, **characterised in that** said extension (61) of material forms a flexible membrane extending opposite the switch (81, 82).

7. A household appliance according to any one of claims 1 to 6, **characterised in that** said extension (61) of material defines several control buttons (3, 4).

8. A household appliance according to any one of claims 1 to 7, **characterised in that** the casing (1) contains an opening (11), in front of which extends the extension (61), which is arranged close to the opening (12) receiving the cord guide element (60).

## Patentansprüche

1. Elektrohaushaltsgerät für kulinarische Zubereitungen, das dafür vorgesehen ist, in der Hand gehalten zu werden, umfassend ein Gehäuse (1), das einen Elektromotor (2) einschließt, der über elektrische Drähte (51, 52) gespeist wird, die aus einem Kabel (5) stammen, das in das Gehäuse (1) durch eine Öffnung (12) eindringt, die ein Kabelführungselement (60) aufnimmt, das das Kabel (5) am Ausgang des Gehäuses (1) schützt, wobei das Gehäuse (1) mindestens eine Steuerungstaste (3, 4) umfasst, **dadurch gekennzeichnet, dass** die Steuerungstaste (3, 4) eine Betätigungsfläche umfasst, die von einer Materialerweiterung (61) definiert wird, die mit dem Kabelführungselement (60) ein und denselben einteiligen Teil (6) bildet, wobei der einteilige Teil (6) um das Kabel (5) herumgeformt ist.

2. Elektrohaushaltsgerät nach Anspruch 1, **dadurch gekennzeichnet, dass** der einteilige Teil (6) aus einem biegsamen Material hergestellt ist.

3. Elektrohaushaltsgerät nach einem der Ansprüche 1 bis 2, **dadurch gekennzeichnet, dass** der einteilige Teil (6) ebenfalls um einen Tragrahmen (7) herumgeformt ist.

4. Elektrohaushaltsgerät nach einem der Ansprüche 1 bis 3, **dadurch gekennzeichnet, dass** die Steuerungstaste (3, 4) einen Schalter (81, 82) betätigt, der im Gehäuse (1) angeordnet ist.

5. Elektrohaushaltsgerät nach Anspruch 4, **dadurch gekennzeichnet, dass** der Schalter (81, 82) ein Schalter für die Steuerung des Motors (2) ist.

6. Elektrohaushaltsgerät nach Anspruch 4 oder 5, **dadurch gekennzeichnet, dass** die Materialerweiterung (61) eine biegsame Membran bildet, die sich gegenüber dem Schalter (81, 82) erstreckt.

7. Elektrohaushaltsgerät nach einem der Ansprüche 1 bis 6, **dadurch gekennzeichnet, dass** die Materialerweiterung (61) mehrere Steuerungstasten (3, 4) definiert.

8. Elektrohaushaltsgerät nach einem der Ansprüche 1 bis 7, **dadurch gekennzeichnet, dass** das Gehäuse (1) eine Aussparung (11) umfasst, vor welcher sich die Erweiterung (61) erstreckt, die nahe der Öffnung (12) angeordnet ist, die das Kabelführungselement (60) aufnimmt.
